# EUROPEAN PATENT SPECIFICATION

(11) **EP 1 047 527 B1**
(45) Date of publication and mention of the grant of the patent: **15.06.2005**
(21) Application number: 96925315.2
(22) Date of filing: 15.07.1996
(51) Int. Cl.: B24C 5/04, B24C 7/00, A61C 3/025

(54) **DEVICE FOR DELIVERY OF PARTICULATE MATTER**
VORRICHTUNG ZUM FÖRDERN VON TEILCHENMATERIAL
DISPOSITIF DE PROJECTION DE MATIERE PARTICULAIRE

(30) Priority: 21.08.1995 US 517379
(43) Date of publication of application: 02.11.2000
(73) Proprietor: Hertz, Reuben, Fort Lauderdale, FL 33306 (US)
(72) Inventor: Hertz, Reuben, Fort Lauderdale, FL 33306 (US)
(74) Representative: Fiener, Josef
(86) International application number: PCT/US1996/011696
(87) International publication number: WO 1997/006924

(56) References cited:
- US-A- 2 441 441
- US-A- 2 725 684
- US-A- 3 631 631
- US-A- 4 475 370
- US-A- 4 941 298

## Description

### BACKGROUND OF THE INVENTION

1. Field of the Invention: This invention relates to an apparatus for propelling according to the preamble of claim 1, as known from US-A-4 475 370. More specifically, this invention is directed to a self-contained device for directing a fluid stream containing particulate matter against a surface to abrade, etch, erase, cut, penetrate, smooth, clean, polish and harden the surface. In one of the preferred embodiments of the invention, the particulate matter is contained within the device, and a carrier fluid, under pressure, introduced therein to produce a fluid stream that can be delivered to a target surface. The device can be powered and/or energized by a source of compressed gas which is coupled to the device through a fixture designed for that purpose. The invention also includes a method for delivery of a particle stream, under pressure, to a target surface; and, to the selective modification of the target surface depending upon the hardness of the particle, the velocity of impact and the extent of the exposure of the target surface to the particle stream.

2. Description of the Prior Art: The use of abrasives to modify the surface of an object, (e.g., clean, polish, etch, etc.) is common practice in a variety of environments and professions. Typically such abrasive can take the form of a paste or free-flowing powder, and delivered to the surface of an object either manually, or through the use of a mechanical implement, or suspended in fluid (gas or liquid).

In the dental profession abrasives can be used to clean teeth and in the preparation of the dentition for bonding with various enamels and/or hardening agents. Typically the abrasive is delivered to the surface of the teeth by means of a carrier fluid stream (e.g., air or inert gas) containing a particulate abrasive The object of such treatment is to remove foreign material, roughen or etch the surface to enhance bonding quality, or to dull an unsightly shine. As the gas and particulate matter impact the target material under pressure, the abrasive nature of the particles progressively causes layers of the target material to sheer one at a time. This process of controlled removal of material from the surface of the teeth is known as "etching".

Typically devices used in the delivery of the carrier fluid stream (e.g., air or inert gas) containing a particulate abrasive have resembled a sand blaster. More specifically, the generation of an abrasive fluid steam is accomplished by the placement of an abrasive in a reservoir and the drawing of the abrasive from the reservoir, under negative pressure, into an accelerated air or gas stream. The source of the accelerated air or gas stream is typically a pressurized gas supplied from a compressor or tank.

In operation of the foregoing devices, the particle stream is directed through a channel of a nozzle (or delivery port) having a precise channel dimension and geometry. Typically this nozzle is constructed of metal or comparable durable material. As is appreciated, the precise delivery of the particle stream requires that the channel dimensions and geometry be maintained. Unfortunately, as the abrasive stream passes through the channel of the nozzle of the device, the inside diameter of the channel is worn (and the original tolerances altered), thereby causing a loss of precision, which ultimately requires the nozzle's replacement or replacement of the entire device. Additional maintenance is also required where, during the course of use, the device is exposed to debris or bacteria and thus must be cleaned prior to re-use. Because of the foregoing demands and constraints, such devices are typically expensive and thus are generally not readily discarded, even when in need of relatively extensive repair or refurbishing. Since such devices are not generally disposable, individuals must be skilled to maintain, clean, refill and reassemble them. This presents an opportunity for unit malfunction from contamination of the abrasive material, and by the reloading of the device with inappropriate and even dangerous particulate material.

Examples of these prior devices include that described in Femwood, US Patent 4,941,298, issued on July 17, 1990. Fernwood discloses a rear-reservoir micro sandblaster which includes a hollow tubular handle with a nozzle at one end for dispensing a mixture of a solid material and a gaseous medium, and a compressed air and solid particulate material-receiving member at the other end of the handle. The nozzle section of the apparatus contains a mixing chamber where a vacuum is created by the flowing pressurized gaseous medium, drawing solid material into the chamber from a rear reservoir. Problems with Fernwood are that it is too costly to be disposable; it draws particulate matter from a container using a vacuum rather than by more efficient blow-through (turbulent or vortex) mixing of this gas as per the subject invention, and is thus very sensitive to variations in material and gas moisture levels and requires an unclogging mechanisms, Fernwood also operates at relatively high pressures 5,5-6,9 bar (80-100 psi) requiring a special tap into the air lines and limiting the range of operational pressures. In addition, the Fernwood device suffers from one or more of the following perceived deficiencies:
- requires special training to set up and use,
- cannot deliver varying sizes of particles,
- is contaminated after every use, and
- is not cost-effective and cannot be completely sterilized between use.

The apparatus disclosed in the Microetcher™ brochure (available from [insert company and address]) is similar to the Fernwood device in that it suffers from most, if not all, of the same perceived deficiencies. Other products available from various manufacturers, are similarly limited, and/or otherwise attempt to differentiate themselves from their competition by offering "improvements" relative to ease of cleaning and/or sterilization, e.g., Handiblaster™, available from Mirage/Chameleon Dental Products, Inc., of [insert address]; and Microetcher II™, available from [insert supplier, address].

### OBJECTS OF INVENTION

It is the object of this invention to remedy the above as well as related deficiencies in the prior art.

More specifically, it is the principle object of this invention to provide a device for delivery of a fluid particle stream which includes a combined particle reservoir and particle mixing chamber integral with such device.

It is another object of this invention to provide a device for precise delivery of a fluid particle stream that is both effective and yet inexpensive and thus readily disposable.

It is still another object of this invention to provide a device for precise delivery of a fluid particle stream that is pre-charged with particulate abrasive matter.

It is still yet another object of this invention to provide a device for precise delivery of a fluid particle stream which includes an adjustable dispensing conduit, or nozzle, for directing the flow of the fluid particle stream onto a delimited area of a target surface.

It is an additional object of this invention to provide a device for precise delivery of a fluid particle stream which includes means for introduction of the stream of fluid, under pressure, into a mass of abrasive particles within the device so as to create a turbulent mixture thereof that can be discharged via a dispensing conduit or nozzle onto a delimited area of a target.

### SUMMARY OF THE INVENTION

The above and related objects are achieved by providing a device for the precision delivery of a particle stream of abrasive material to a delimited area of a target. In one of the preferred embodiments of the invention, the device comprises an essentially closed chamber having a fitting that is adapted for releasable connection to a source of pressurized fluid, means for directing the pressurized fluid into a mass of abrasive particles within the closed chamber so as to generate a mixture of fluid and abrasive particles within the closed chamber and a nozzle for delivery of the fluid and particle mixture to a delimited area of a target. The term "fluid" as used herein is intended as inclusive of gases, liquids and any combination thereof. In the preferred embodiments of this invention, the source of gas is an air compressor, or pressurized canister containing air or an inert gas. The abrasive particles which are suitable for use in this device include aluminum oxide, sodium bicarbonate and other common polishing or grinding agents. The particle size of the abrasive should obviously be smaller than the any of the passages of the device through which they are to pass. The particle density is to a degree limited by the amount of pressure required to effect mixing thereof with the fluid in the chamber of the device and thereafter the transport/flow of the resultant mixture through the nozzle of the device.

The pressurized fluid is introduced into the chamber at or near the top of the device, and thereafter is directed through a fluid transport conduit to the base of the device where it is forced through a free-flowing mass of particulate (abrasive) matter that has been predisposed within the device at the time of its manufacture. Upon injection of the fluid into the chamber, turbulent mixing of fluid and abrasive particles occurs which mixture is and remains under substantial pressure (generally in excess of one (1) atmosphere). This is accomplished by control of the cross-sectional area of the fluid transport conduit relative to the cross-sectional area of the nozzle. The selection of a specific diameter for these two device components is a function of intended use, the particle size of the abrasive material to be delivery with such device and the desired force to be exerted upon the target by the fluid particle stream as it is expelled from the end of the nozzle onto the target surface. In the preferred embodiments of the invention, the cross-sectional dimension of the fluid transport conduit is greater than the cross-sectional dimension of the nozzle. More specifically, the inside diameter of the conduit designed for dental applications is preferably at least about 50% greater than the cross-sectional area of the nozzle and can range from about 0,25 mm (0.01") to about 5,0 mm (0.20"), with the most preferred diameter being about 1,12 mm (0.045"). The inside diameter of the nozzle can range from about 0,125 mm (0.005") to about 2,5 mm (0.100"), with the preferred diameter being about 0,533 mm (0.021").

In the preferred embodiment of the invention the nozzle comprises an elongated tube fixedly positioned in an orifice in the base of the chamber, and which extends both into and from the base of the chamber. The degree of extension of the distal end of the nozzle into the chamber is calculated to contribute and promote the formation of a turbulent mixture of fluid and particles in the chamber; and, the proximal end of the nozzle, the precise delivery of the fluid stream containing the abrasive particles.

In one of the preferred embodiments of this invention the distal end of the nozzle is positioned near the top (lid) of the chamber, and above the open end of the fluid transport conduit. In addition, the relative height, or extension, of the nozzle into the chamber is also a function of the volume of abrasive particles that is to be pre-loaded into the chamber at the time of manufacture. More specifically, it is preferable that the height of the nozzle extend at least above the level of the anticipated abrasive charge, and yet be sufficiently distant from the top (lid) of the chamber to allow for turbulent mixing and channeling of the mixture into the opening at the distal end of the nozzle.

The chamber design of the device is further unique in that it provides an effective and inexpensive configuration for the precise delivery of a fluid particle stream in a disposable package.

This invention also provides a method for propelling particulate matter against a surface of a target material using the above-described apparatus, including the steps of delivering a stream of fluid (e.g. gas) into the fluid delivery conduit and from such conduit into the chamber of this device, so that the flow of the gas stream continuously blows through the quantity of particulate matter, causing the particulate matter to mix with the gas stream, forming a gas and particle mixture, and discharging the mixture through the discharge conduit and the discharge port to strike the surface of the target material.

### BRIEF DESCRIPTION OF THE DRAWINGS

The drawings which are provided and described herein are intended to be illustrative of a number of the preferred embodiments of this invention. Where an element of an illustrated device is common to more than one drawing, it is assigned the same reference numeral for continuity of expression and ease of understanding.
FIG. 1 is a cross-sectional side view of the preferred embodiment of the inventive particle-propelling apparatus. The particulate matter and gas source are omitted.
FIG. 2 is a partial cross-sectional side view of the apparatus of FIG. 1, revealing some of the outer chamber side wall having optional grid measuring markings and a circumferential color-code band. FIG. 2a is a perspective view of the apparatus of FIG. 2 in the hands of a user ready for operation.
FIG. 3 is a view as in FIG. 1, showing the apparatus with the particulate matter added.
FIG. 4 is a view as in FIG. 3, with the apparatus in operation discharging the gas and particulate matter mixture toward a surface of a target material.
FIGS. 5 and 6 show alternative embodiments of the claimed apparatus, formed from a conventional industrial syringe. FIG. 5a is a perspective view of the apparatus of FIG. 5 in the hand of a user ready for operation.
FIG. 7 is a perspective view, in partial section, of an alternative embodiment of the device of this invention in which a fluid delivery conduit is molded into the body of the device housing.
FIG. 8 is a perspective view of the device of FIG. 7 that has been molded from a transparent material.

### DETAILED DESCRIPTION OF THE INVENTION INCLUDING PREFERRED EMBODIMENTS

The detailed embodiments of the invention disclosed herein are representative of a number of the preferred configurations of the device.

### First Preferred Embodiment

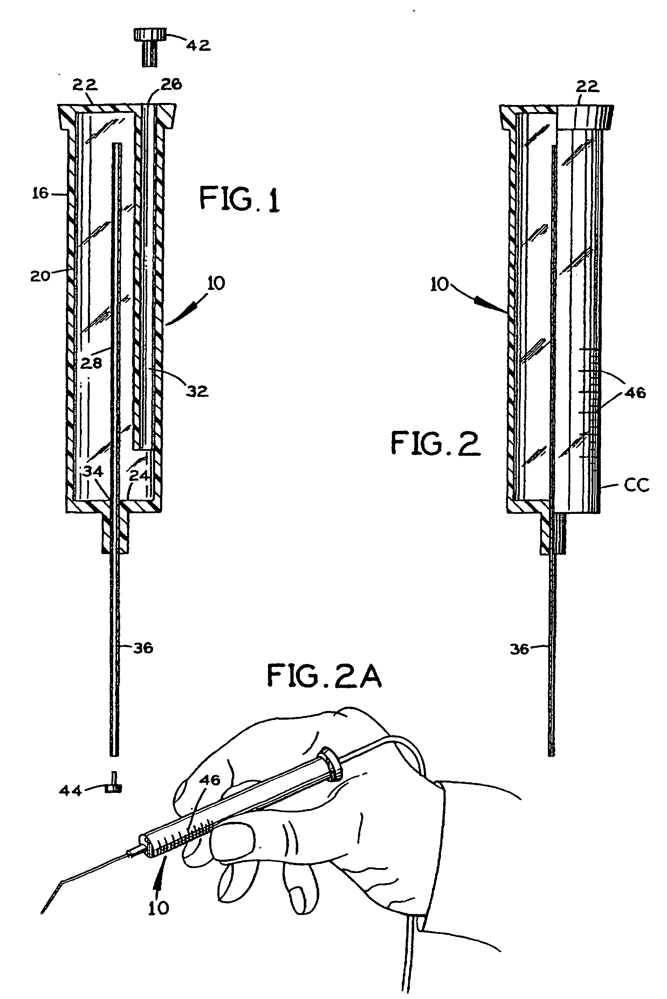

Referring to FIGS. 1-4, a disposable particle-propelling apparatus 10 is disclosed for propelling particulate matter P against target material T. The apparatus 10 includes a cylindrical mixing chamber 16 having a chamber wall 20 and two end wall portions 22 (lid) and 24 (base), respectively. Apparatus 10 is powered by a compressed gas source, such as an air compressor or a compressed gas cylinder (not shown), which connects to and is in fluid communication with the gas receiving port 26 of end wall portion 22. The gas-delivery conduit 32 extends from the gas receiving port 26 into the mixing chamber 16. End wall 24 (base) has a mixture discharge port 34. A mixture discharge conduit 28 extends in fluid communication from mixture discharge port 34 into mixing chamber 16. A particle directing tube 36 is provided in fluid communication with discharge port 34 and extends opposite discharge conduit 28 outside from mixing chamber 16.

A quantity of particulate matter P is sealed inside chamber 16, the quantity being sufficient to only partially fill chamber 16, leaving space for gas and particulate matter P to mix. The complete sealing of the particulate matter P gives matter P a virtually unlimited shelf life and protection from contamination (e.g. humidity). Mixing chamber 16 provides a gas-tight seal to maintain particle sterility and to prevent gas leakage during operation. An inlet cap 42 and a tip cap 44 seal gas-receiving port 26 and mixture discharge port 34, respectively, and are removed when apparatus 10 is to be connected to the compressed gas source for use. Volume grid markings 46 are preferably provided on the wall side portion 20 of chamber 16 so that the quantity of particulate matter P used can be measured and visually observed when wall 20 is constructed of a transparent or translucent material. Chamber wall 20 may also be color-coded to identify the type of particulate matter P. The color code marking CC may indicate the particle size and the type of particulate matter P.

Tube 36 serves to both direct and accelerate the discharging gas and particular matter P mixture without the mixing chamber. As a result, the particulate matter P can be applied to a focused or delimited area of a target and at a uniform velocity. Since apparatus 10 is disposable, tube 36 can be fabricated inexpensively to sustain a limited use. Tube 36 is manually bendable (without crimping) thus permitting it to be quickly set to an angle without crimping, making the discharge omni-directional, and, thus, provide access to-hard-to-reach surfaces. Tube 36 preferably has a preset orifice diameter to accommodate a given size and type of particulate matter P, and is preferably made of metal, but may also be formed of suitable durable plastic or comparable material.

Chamber 16 is preferably an integrated chamber with balanced distribution of weight which is preferably slender enough to hold and manipulate as though it were a writing instrument. The direct, blow-through, turbulent mixing within chamber 16 makes apparatus 10 operational at all orientations relative to the target surface and to the direction of gravity. The slender construction makes chamber 16 able to access narrow spaces and operate in small confined areas. Chamber 16 can receive and function with varying gas pressures applied to gas-receiving port 26, selected to accelerate particles to various desired velocities for various given tasks. Turbulent mixing of particulate matters P directly in the path of the gas stream within chamber 16 enables apparatus 10 to deliver particulate matters P of a wide range of sizes, and to mix and deliver a wide range of particulate matter types. The direct, blow-through mixing in chamber 16, permits operation at very low pressures, thereby increasing the range of operational pressures which may be selected.

Apparatus 10 contains no moving parts and is preferably made of disposable plastic, so that particulate matter P and apparatus 10 can be sterilized at the factory, and apparatus 10 replaced rather than refilled and reused Apparatus 10 is designed to withstand common sterilization techniques such as autoclave, chemical treatments and irradiation. Contemplated apparatus 10 construction materials may include but are not limited to plastic, stainless steel, Delrin™ and Teflon™. Apparatus 10 is light-weight, manufactured to be recyclable, and easy to use and replace without training or maintenance.

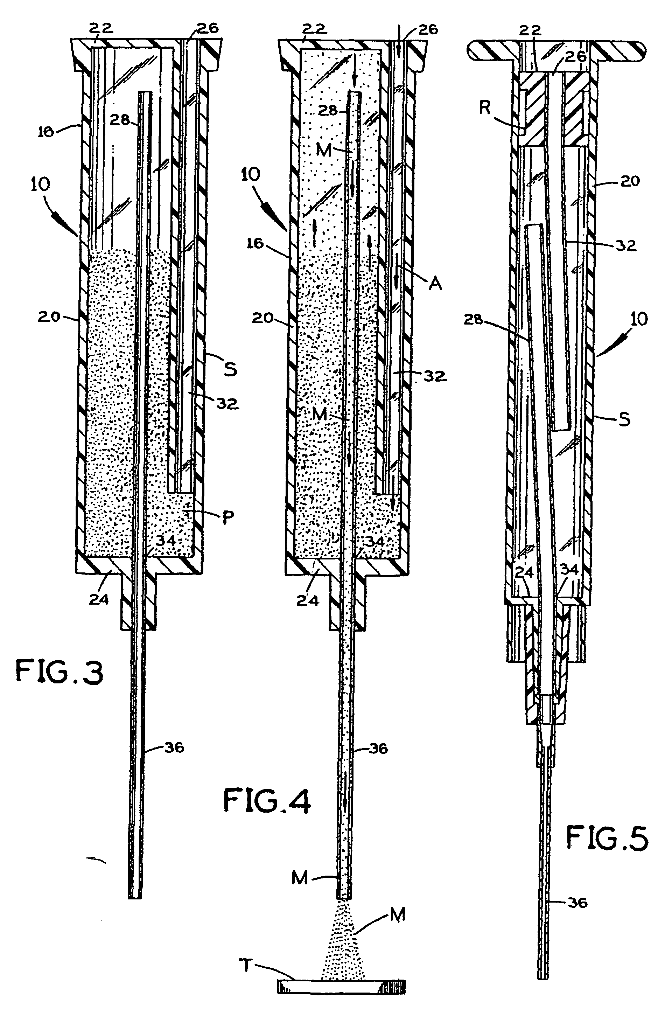

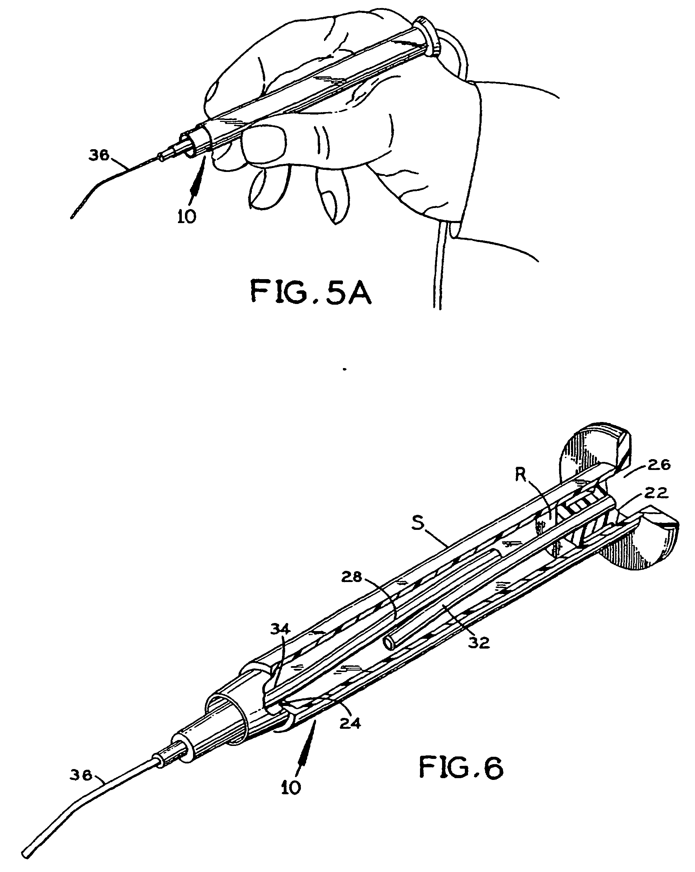

Apparatus 10 can be constructed from an adapted disposable syringe S of a type which is extremely common in the health care industry, see Figures 5 and 6. Needle 36 is attached to a standard syringe needle with a dulled tip, and formed of either metal or plastic. Gas-receiving port 26 is a hole bored into a standard rubber syringe stopper R separated from a standard syringe plunger. Mixture discharge port 34 is the existing discharge opening of the syringe S, while standard tubing can be used for gas delivery conduits 32 and 28.

### Second Preferred Embodiment

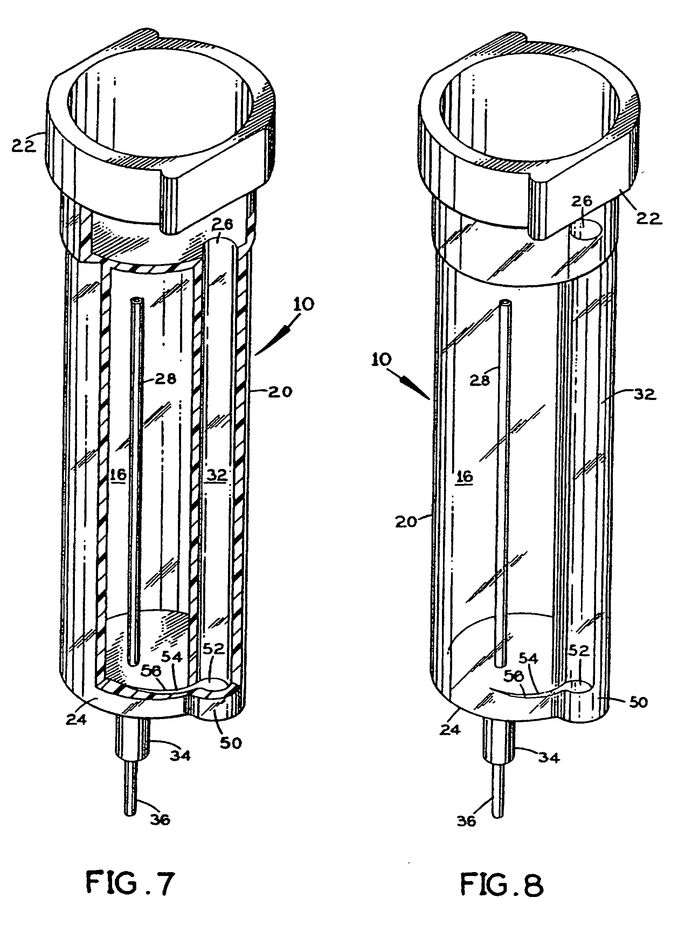

FIG. 7 depicts an alternative embodiment of the invention wherein the design choice of the various component parts thereof is based, in part, upon fabrication demands dictated by injection molding constraints and manufacturing economies. More specifically, the fluid-deliver conduit (32) is fabricated as an integral component of the chamber wall (20). The fluid-deliver conduit (32) is further distinct from the First Preferred Embodiment described above in that such conduit now extends the full length of the chamber to the base (24) thereof The base (24) is also unique in that a chute (50) (as more fully illustrated in FIG. 8 described hereinafter) has been formed therein to provide for deflection of the fluid into the chamber so as to cause effective mixing of the fluid and the particle charge into a chute formed within the base of the chamber. This chute includes three distinctive functional features, namely an essentially round or bowl-like cavity (52) that roughly corresponds in overall dimension with the distal end of the fluid-delivery conduit (32). The second functional features comprises an intermediate section (54), or ascending ramp which is characterized by its progressive slope, that extends for the round or bowl-like cavity (52) to a riser (56) which directs the fluid into the chamber and thereby turbulence and/or a vortex within the chamber so as to effect mixing of the fluid with the free flowing particles that are contained therein.

FIG. 8 further illustrates additional detail of the construction of the device of FIG. 7 wherein the interior of the base of the device is revealed. More specifically, FIG. 8 depicts a device of the type illustrated in FIG. 7 fabricated from a plastic material. In this view, the detail of the base (24) is better revealed in that it further depicts the chute (50) and the ascending ramp (54) for channeling the fluid stream from the conduit into the chamber of the device. The chute can be modified as desired to optimize mixing and/or other operational objectives.

### Method

In practicing the invention, the following method may be used. Reference is once again made to the illustrations of the preferred embodiments, specifically FIG. 4. A stream of gas A is delivered through gas-receiving port 26 and gas-delivery conduit 32 into chamber 16 from the gas air source (not shown). The gas stream A blows through the particulate matter P and causes the particulate matter P to mix with the gas stream in chamber 16. The air and particle mixture M enter and pass through discharge conduit 28, discharge port 34 and directing tube 36, and exist the apparatus 10 to strike the target material T, this method is performed without generating heat, vibration, appreciable noise levels, and with a device free of any moving parts. In contrast to the prior art devices discussed herein which draw the particulate matter from a reservoir, under vacuum, into a hand piece (and are thus limited as to the amount of pressure that can be exerted on the air/particle stream), the direct blow-through of fluid into the particle mass allows for modulation of the pressure of the resultant stream over a much broader range and thus more precise delivery thereof to a delimited area of a target.

While the various embodiments of the invention have been described and illustrated herein, such is not intended, nor should it be construed a delimiting the scope of the invention, which is set forth in the following claims.

## Claims

1. An apparatus for propelling a fluid mixture containing particulate matter (P), under pressure, against a surface of a target (T) to effect controlled and selective modification of the surface of said target, wherein the apparatus (10) comprises:
a. an essentially cylindrical chamber (16) having a side-wall (20), a lid (22) at the top of the chamber (16) and a base (24) at the bottom of the chamber (16),
wherein said lid (22) has a fluid receiving port (26) which is adapted for coupling to a source of fluid under pressure, and said base (24) has a discharge port (34) which is adapted for coupling to a nozzle (36),
b. a fluid-delivery conduit (32) having a proximal end and a distal end,
wherein the proximal end of said conduit (32) extends from the fluid receiving port (26) of the lid (22) into the chamber (16) and said distal end of said conduit (32) opens into the chamber (16) for delivery of a fluid into said chamber (16) under pressure,
c. a nozzle (36) comprising a discharge conduit (28) fixedly positioned in the discharge port (34) of the base (24) of the cylinder (16), said discharge conduit (28) having an open proximal end and an open distal end said proximal end of said discharge conduit (28) extending from the base (24) of the cylinder (16) and into the cylindrical chamber (16) above the level of the distal end of the fluid-delivery conduit (32), and
d. a quantity of particulate matter (P) within the chamber (16) sufficient to cover the distal end of the fluid delivery conduit 32 and yet insufficient to cover the proximal end of the discharge conduit (28),
whereby upon introduction of fluid, under pressure, through the fluid-delivery conduit (32) into the chamber (16), particulate matter (P) within said chamber 16 is caused to mix with said fluid, and the resultant fluid and particle mixture discharged through the distal end of the discharge conduit (28) of said nozzle (36) onto the surface of a target (T) so as to effect modification of the surface of said target (T), **characterized in that** the orientation of the distal end of the fluid-delivery conduit (32) directs the fluid into the chamber (16) so as to create a swirling or cyclone action therein.

2. Apparatus of claim 1, wherein each of said fluid-delivery conduit (32) and said discharge conduit (28) have an essentially circular cross-sectional area along their respective lengths, with the proviso that the cross-sectional area of said fluid delivery conduit (32) is greater than the cross-sectional area of said discharge conduit (28).

3. Apparatus of claim 1, wherein the cross-sectional area of said fluid-delivery conduit (32) is at least 50% greater than the cross-sectional area of said discharge conduit (28).

4. Apparatus of claim 1, wherein the distal end of said fluid-delivery conduit (32) extends into the chamber (16) to a level above the base of the chamber (16).

5. Apparatus of claim 4, wherein the distal of said fluid-delivery conduit (32) extends into the chamber (16) to below the level of particulate matter (P).

6. Apparatus of claim 1, wherein the distal end of said fluid-delivery conduit extends into a chute (50) formed within the base of the chamber (16),
said chute being (50) characterized as including on one end thereof means for receiving the distal end of the fluid-delivery conduit (32) and a ramp 54, which includes an intermediate section, having a progressive slope, that extends for said receiving means to a riser (56) on the opposite end thereof,
whereupon fluid from said conduit (32) is caused to be directed by said chute (50) to flow in and around said chamber (16) so as to effectively mix said fluid with particulate matter (P). present therein.

7. Apparatus of claim 1, wherein the fluid-delivery conduit (32) has an essentially circular cross-sectional area and an inside diameter of from about 0.010" to about 0.200".

8. Apparatus of daim 7, wherein the fluid-delivery conduit (32) has an essentially circular cross-sectional area and an inside diameter of about 0.045".

9. Apparatus of claim 1, wherein the discharge conduit (28) has an essentially circular cross-sectional area and an inside diameter of from about 0.005" to about 0.100".

10. Apparatus of claim 9, wherein the fluid-delivery conduit (36) has an essentially circular cross-sectional area and an inside diameter of about 0.021".

11. Apparatus of claim 1, wherein the fluid-delivery conduit (32) is adapted for coupling to a source of gas under pressure.

12. Apparatus of claim 1 wherein the fluid-delivery conduit (32) is adapted to coupling to a source of liquid under pressure.

13. Apparatus of claim 1, wherein the particulate matter (P) is selected from the group consisting of aluminum oxide, calcium carbonate and mixtures thereof.

14. Apparatus of claim 13, wherein the particulate matter (P) has an average particle size suitable for use in the cleaning, polishing or etching teeth.
with the proviso that none of the particles are larger than the cross-sectional area of any of the passages of the apparatus (10) through with they are to pass.

## Patentansprüche

1. Vorrichtung zum Vorwärtstreiben eines Teilchenmaterial (P) enthaltenden Fluidgemischs unter Druck gegen eine Oberfläche eines Ziels (T) zum Bewirken einer gesteuerten und selektiven Modifikation der Oberfläche des Ziels, wobei die Vorrichtung (10) umfasst:
a. eine weitgehend zylindrische Kammer (16) mit einer Seitenwand (20), einem Verschlussdeckel (22) an der Oberseite der Kammer (16) und einem Boden (24) an der Unterseite der Kammer (16), wobei der Verschlussdeckel (22) eine Fluideintrittsöffnung (28) aufweist, die zum Anschluss an eine Fluidquelle unter Druck geeignet ist, und der Boden (24) eine Austrittsöffnung (34) aufweist, die zum Anschluss an eine Düse (36) geeignet ist,
b. einen Fluidförderungskanal (32) mit einem proximalen Ende und einem distalen Ende, wobei sich das proximale Ende des Kanals (32) von der Fluideintrittsöffnung (26) des Verschlussdeckels (22) aus in die Kammer (26) hineinerstreckt und das distale Ende des Kanals (32) in die Kammer (16) mündet, um ein Fluid unter Druck in die Kammer (16) zu fördern,
c. eine Düse (36), die einen fest in der Austrittsöffnung (34) des Bodens (24) des Zylinders (16) angeordneten Ausströmungskanal (28) umfasst, wobei der Ausströmungskanal (28) ein offenes proximales Ende und ein offenes distales Ende aufweist, wobei sich das proximale Ende des Ausströmungskanals (28) vom Boden (24) des Zylinders (16) aus und über die Höhe des distalen Endes des Fluidförderungskanals (32) in die zylindrische Kammer (16) hineinerstreckt, und
d. eine Menge von Teilchenmaterial (P) innerhalb der Kammer (16), die ausreicht, das distale Ende des Fluidförderungskanals (32) zu bedecken und dennoch nicht ausreicht, das proximale Ende des Ausströmungskanals (28) zu bedecken,
wodurch bei Einleitung von Fluid unter Druck durch den Fluidförderungskanal (32) in die Kammer (16) bewirkt wird, dass sich Teilchenmaterial (P) innerhalb der Kammer (16) mit dem Fluid mischt und das resultierende Fluid- und Teilchengemisch durch das distale Ende des Ausströmungskanals (28) der Düse (36) auf die Oberfläche eines Ziels (T) ausgestoßen wird, um eine Modifikation der Oberfläche des Ziels (T) zu bewirken,
**dadurch gekennzeichnet, dass**
die Ausrichtung des distalen Endes des Fluidförderungskanals (32) das Fluid in die Kammer (16) hineinleitet, um eine Verwirbelungs- oder Zyklanbewegung darin zu erzeugen.

2. Vorrichtung nach Anspruch 1, wobei sowohl der Fluidförderungskanal (32) als auch der Ausströmungskanal (28) entlang ihrer jeweiligen Länge eine weitgehend kreisrunde Querschnittsfläche aufweisen, mit der Vorgabe, dass die Querschnittsfläche des Fluidförderungskanals (32) größer ist als die Querschnittsfläche des Ausetrömungskanals (28).

3. Vorrichtung nach Anspruch 1, wobei die Querschnittsfläche des Fluidförderungskanals (32) wenigstens 50 % größer ist als die Querschnittsfläche des Ausströmungskanals (28).

4. Vorrichtung nach Anspruch 1, wobei sich das distale Ende des Fluidförderungskanals (32) bis zu einer Höhe über dem Boden der Kammer (16) in die Kammer (16) hineinerstreckt.

5. Vorrichtung nach Anspruch 4, wobei sich das distale Ende des Fluidförderungskanals (32) bis unter den Spiegel des Teilchenmaterials (P) in die Kammer (16) hineinerstreckt.

6. Vorrichtung nach Anspruch 1, wobei sich das distale Ende des Fluidförderungskanals in eine Schütte (50) hineinerstreckt, die in den Boden der Kammer (16) eingeformt ist, wobei die Schütte (50) **dadurch gekennzeichnet ist, dass** sie an einem Ende davon Mittel zur Aufnahme des distalen Endes des Fluidförderungskanals (32) und eine Rampe (54) aufweist, die einen Zwischenteil mit einer progressiven Steigung einschließt, die sich für das Aufnahmemittel bis zu einem Steiger (56) am entgegengesetzten Ende davon erstreckt, woraufhin bewirkt wird, dass Fluid von dem Kanal (32) von der Schütte (50) so gelenkt wird, dass es in und um die Kammer (18) strömt, um das Fluid mit darin vorhandenem Teilchenmaterial (P) wirksam zu mischen.

7. Vorrichtung nach Anspruch 1, wobei der Fluidförderungskanal (32) eine weitgehend kreisrunde Querschnittsfläche und einen Innendurchmesser von ca. 0,010" bis ca. 0,200" aufweist.

8. Vorrichtung nach Anspruch 7, wobei der Fluidförderungskanal (32) eine weitgehend kreisrunde Querschnittsfläche und einen Innendurchmesser von ca. 0,045" aufweist.

9. Vorrichtung nach Anspruch 1, wobei der Ausströmungskanal (28) eine weitgehend kreisrunde Querschnittsfläche und einen Innendurchmesser von ca. 0,005" bis ca. 0,100" aufweist.

10. Vorrichtung nach Anspruch 9, wobei der Fluidförderungskanal (32) eine weitgehend kreisrunde Querschnittsfläche und einen Innendurchmesser von ca. 0,021" aufweist.

11. Vorrichtung nach Anspruch 1, wobei der Fluidförderungskanal (32) zum Anschließen an eine Gasquelle unter Druck geeignet ist.

12. Vorrichtung nach Anspruch 1, wobei der Fluidförderungskanal (32) zum Anschließen an eine Flüssigkeitsquelle unter Druck geeignet ist.

13. Vorrichtung nach Anspruch 1, wobei das Teilchenmaterial (P) aus der Gruppe bestehend aus Aluminiumoxid, Calciumcarbonat und Gemischen davon ausgewählt ist.

14. Vorrichtung nach Anspruch 13, wobei das Teilchenmaterial (P) eine durchschnittliche Teilchengröße aufweist, die zur Verwendung beim Reinigen, Polieren oder Anätzen von Zähnen geeignet ist, mit der Vorgabe, dass keines der Teilchen größer ist als die Querschnittsfläche aller Durchgänge der Vorrichtung (10), die sie passieren müssen.

## Revendications

1. Dispositif pour projeter un mélange fluide contenant une matière particulaire (P) sous pression, contre une surface d'une cible (T) pour provoquer une modification contrôlée et sélective de la surface de ladite cible, dans lequel un appareil (10) comprend :
a) une chambre sensiblement cylindrique (16) ayant une paroi latérale (20), un couvercle (22) sur le dessus de la chambre (18) et une base (24) au fond de la chambre (16),
dans lequel ledit couvercle (22) présente un orifice d'admission de fluide (26) qui est adapté pour être couplé à une source de fluide sous pression et ladite base (24) a un orifice de décharge (34) qui est approprié pour être couplé à une buse (36),
b) un conduit d'amenée de fluide (32) avec une extrémité proximale et une extrémité distale, dans lequel l'extrémité proximale dudit conduit (32) s'étend depuis l'orifice d'admission de fluide (26) du couvercle (22) dans la chambre (16) et ladite extrémité distale dudit conduit (32) débouche dans la chambre (16) pour amener un fluide dans ladite chambre (16) sous pression,
c. une buse (36) comprenant un conduit de décharge (28) positionné fixement dans l'orifice de décharge (34) de la base (24) du cylindre (16), ledit conduit de décharge (28) ayant une extrémité proximale ouverte et une extrémité distale ouverte dudit conduit de décharge (28) s'étendant depuis la base (24) du cylindre (16) et s'étendant dans la chambre cylindrique (16) au-dessus du niveau de l'extrémité distale du conduit d'amenée de fluide (32) et
d. une quantité de matière particulaire (P) à l'intérieur de la chambre (16) suffisante pour couvrir l'extrémité distale du conduit d'amenée de fluide (32) et cependant insuffisante pour couvrir l'extrémité proximale du conduit de décharge (28),
lors de l'introduction du fluide sous pression, à travers le conduit d'amenée de fluide (32) dans la chambre (16), la matière particulaire (P) à l'intérieur de ladite chambre (18) est amenée a être mélangée avec ledit fluide , et le fluide en résultant et le mélange particulaire sont déchargés par l'extrémité distale du conduit de décharge (28) de ladite buse (36) sur la surface d'une cible (T) de manière à effectuer la modification de ladite surface de ladite cible (T)
**caractérisé en ce que** l'orientation de l'extrémité distale du conduit d'amenée de fluide (32) dirige le fluide à l'intérieur de la chambre (16) de manière à créer une action de tourbillon ou de cyclone à l'intérieur.

2. , Appareil de la revendication 1, dans lequel chacun dudit conduit d'amenée de fluide (32) et du conduit de décharge (28) a une zone de section transversale sensiblement circulaire le long de leurs longueurs respectives sous réserve que la zone de section transversale du conduit d'amenée de fluide (32) soit plus grande que la zone de section transversale dudit conduit de décharge (28).

3. Appareil de la revendication 1, dans lequel la zone de section transversale dudit conduit d'amenée de fluide (32) est d'au moins 50 % plus grande que la zone de section transversale dudit conduit de décharge (28).

4. Appareil de la revendication 1, dans lequel l'extrémité distale dudit conduit d'amenée de fluide (32) s'étend dans la chambre (16) à un niveau au-dessus de la base de la chambre (16).

5. Appareil de la revendication 4, dans lequel l'extrémité distale dudit conduit d'amenée de fluide (32) s'étend dans la chambre (16) en dessous du niveau de la matière particulaire (P).

6. Appareil selon la revendication 1, dans lequel l'extrémité distale dudit conduit d'amenée de fluide (32) s'étend dans une goulotte (50) formée à l'intérieur de la base de la chambre (16),
ladite goulotte (50) étant caractérisée dans le fait d'inclure à l'une des extrémités des moyens pour recevoir l'extrémité distale du conduit d'amenée de fluide (32) et une rampe (54) qui comprend une section intermédiaire ayant une inclinaison progressive qui s'étend pour lesdits moyens de réception à un tube élévateur (56) sur son extrémité opposée,
sur quoi le fluide provenant dudit conduit (32) est amené à être dirigé par ladite goulotte (50) pour s'écouler dans et autour de ladite chambre (16) de manière à mélanger ledit fluide à la matière particulaire (P) présente à l'intérieur.

7. Appareil de la revendication 1, dans lequel ledit conduit d'amenée (32) présente une zone de section transversale essentiellement circulaire et un diamètre interne compris entre 0:010" à environ 0.200".

8. Appareil de la revendication 7, dans lequel ledit conduit d'amenée (32) présente une zone de section transversale essentiellement circulaire et un diamètre interne d'environ 0,045".

9. Appareil de la revendication 1, dans lequel ledit conduit de décharge (28) a une zone de section transversale essentiellement circulaire et un diamètre interne compris entre 0:005" à environ 0.100".

10. Appareil de la revendication 9, dans lequel ledit conduit d'amenée de fluide (36) présente une zone de section transversale essentiellement circulaire et un diamètre interne d'environ 0,021".

11. Appareil de la revendication 1, dans lequel ledit conduit d'amenée de fluide (32) est prévu pour l'accouplement à une source de gaz sous pression.

12. Appareil de la revendication 1, dans lequel ledit conduit d'amenée de fluide (32) est prévu pour l'accouplement à une source de liquide sous pression.

13. Appareil de la revendication 1, dans lequel la matière particulaire (P) est sélectionnée parmi le groupe constitué d'oxyde d'aluminium, de carbonate de calcium et de mélanges de ces derniers.

14. Appareil de la revendication 13, dans lequel la matière particulaire (P) présente une taille moyenne de particule appropriée pour l'utilisation dans le nettoyage, le polissage ou l'attaque de dents à la condition qu'aucune des particules soient plus grande que la zone de section transversale de chacun des passages de l'appareil (10) à travers lesquels ils doivent passer.
